# EUROPÄISCHE PATENTSCHRIFT

(11) **EP 2 021 526 B1**
(45) Veröffentlichungstag und Bekanntmachung des Hinweises auf die Patenterteilung: **09.01.2019**
(21) Anmeldenummer: 07725154.4
(22) Anmeldetag: 12.05.2007
(51) Int. Cl.: F02F 1/00, F02F 3/10, F02B 77/02, F16J 9/00, C23C 24/10, C23C 30/00, F16J 9/22, F16C 33/04

(54) **VERSCHLEISSSCHUTZEINRICHTUNG UND VERFAHREN ZUR HERSTELLUNG EINER SOLCHEN**
WEAR PROTECTION DEVICE AND METHOD FOR THE PRODUCTION THEREOF
DISPOSITIF DE PROTECTION D'USURE ET PROCEDE PERMETTANT DE LE PRODUIRE

(30) Priorität: 17.05.2006 DE 102006023396
(43) Veröffentlichungstag der Anmeldung: 11.02.2009
(73) Patentinhaber: MAN DIESEL & TURBO, FILIAL AF MAN DIESEL & TURBO SE, TYSKLAND, 2450 København SV (DK)
(72) Erfinder: BENZON, Michael, Eis, 3480 Fredensborg (DK); MOCZULSKI, Lech, 2650 Hvidovre (DK); FOGH, Jesper, Weis, 2000 Frederiksberg (DK)
(74) Vertreter: Munk, Ludwig
(86) Internationale Anmeldenummer: PCT/EP2007/004234
(87) Internationale Veröffentlichungsnummer: WO 2007/131743

(56) Entgegenhaltungen:
- EP-A- 1 036 611
- EP-A- 1 516 942
- WO-A-02/24970
- WO-A-2004/072357
- CH-A5- 674 650
- DE-A1- 19 900 942
- DE-A1- 19 908 107
- GB-A- 2 264 079
- US-A- 3 743 556

## Beschreibung

Die Erfindung betrifft gemäß einem ersten Erfindungsgedanken eine Verschleißschutzeinrichtung für aus einem metallischen Basismaterial bestehende Bauteile von Maschinen, insbesondere von Zweitakt-Großdieselmotoren, die als auf dem Basismaterial anbringbare Beschichtung ausgebildet ist, die aus wenigstens einer Schicht mit in einer metallischen Matrix aufgenommenen Partikeln aus keramischen Material besteht.

Ein weiterer Erfindungsgedanke betrifft ein Verfahren zur Herstellung einer derartigen Verschleißschutzeinrichtung.

Aus der DE 103 19 141 A1 sind eine Verschleißschutzeinrichtung sowie ein Verfahren oben genannter Art bekannt. Hierbei ist die die keramischen Partikel aufnehmende Matrix als Ni, Cr, B, Si-Legierung ausgebildet. Der Schmelzpunkt dieses Materials liegt in einem Temparaturbereich von oberhalb 1300°C und damit sehr hoch, jedenfalls höher als der Schmelzpunkt von normalerweise als Basismaterial Verwendung findenden Materialien, wie Gusseisen etc.. Der Schmelzpunkt von Gusseisen liegt bei lediglich 1100°C. Infolge der hohen Schmelztemperatur der Matrix besteht die Gefahr, dass sich die Karbide, die in der Regel die Keramikpartikel bilden, auflösen oder in andere Karbidformen mit geringerer Größe und Härte umwandeln, was den gewünschten Verschleißschutz beeinträchtigen kann und daher unerwünscht ist. Außerdem ist bei Verwendung des genannten Matrix-Materials der Anteil der Karbide an der Beschichtung stark begrenzt. Bei der bekannten Anordnung ist ein Anteil von maximal 50% vorgesehen. Ein weiterer Nachteil des genannten Standes der Technik ist darin zu sehen, dass die Temperatur des auf das Grundmaterial aufzubringenden Beschichtungsmaterials infolge der hohen Schmelztemperatur des Matrix-Materials sehr hoch ist, so dass es zu einer Schädigung des Grundmaterials bzw. zu einem unerwünschten Verzug des Grundmaterials und zu inneren Spannungen innerhalb des Grundmaterials kommen kann, die eine Rissbildung begünstigen, Um dem vorzubeugen ist ein hoher Aufwand beim Auftragen des Beschichtungsmaterials und bei der Abkühlung der Beschichtung erforderlich.

Aus der GB-A-2 264 079 ergibt sich eine verschleißfeste Beschichtung, die auf einem metallischen Kolbenmotor-Basismaterial aufgebracht ist und die aus einer in einer Matrix aufgenommenen WC-Partikeln besteht, wobei die Matrix eine Nickel-Legierung mit P und Si als Legierungselementen besteht und die WC-Partikel eine Härte von 3000 HV sowie eine Größe von 10 bis 50 µm und eine kugelförmige Form aufweisen können. Der Schmelzpunkt der die Matrix bildenden Nickel-Legierung mit P und Si als Legierungselementen liegt unter 900°C.

Die CH 674 650 A5 offenbart einen Aufbringvorgang von Ni-Legierungen auf ein metallisches Basismaterial, wobei das Basismaterial durch Induktoren örtlich vorgewärmt wird und danach die Ni-Legierung gesintert wird. Zwischen der zur Erwärmung des Basismaterials vorgesehenen Wärmequelle und der zu beschichtenden Oberfläche findet eine oberflächenparallele Relativbewegung statt. Das Beschichtungsmaterial ist pulverförmig und wird mittels eines thermischen Spritzverfahrens aufgebracht. Nach dem Sintern der Beschichtung erfolgt eine örtliche Wärmenachbehandlung ohne weitere Materialzufuhr. Um die Wärmebehandlung beim Sintern der Beschichtung zu kontrollieren wird die Leistung der zugeführten Wärme gemessen.

Hiervon ausgehend ist es daher die Aufgabe der vorliegenden Erfindung, unter Vermeidung der eingangs genannten Nachteile die gattungsgemäße Verschleißschutzeinrichtung so zu verbessern, dass nicht nur eine hohe Tragfähigkeit gewährleistet ist, sondern auch negative Auswirkungen auf das Grundmaterial vermieden werden. Eine weitere Aufgabe besteht darin, ein einfaches und kostengünstiges Verfahren zur Herstellung der erfindungsgemäßen Verschleißschutzeinrichtung zur Verfügung zu stellen.

Der auf die Verschleißschutzeinrichtung sich beziehende Teil der Aufgabe wird erfindungsgemäß durch die Merkmalskombination gemäß Anspruch 1 gelöst.

Die für die Matrix angegebene Nickel-Legierung mit P und Si als weiteren Legierungsbestandteilen führt zu einer Absenkung des Schmelzpunkts der Legierung deutlich unterhalb des Schmelzpunkts von Gusseisen oder anderen als Grundmaterial in Frage kommenden Materialien. Infolge der vergleichsweise niedrigen Schmelztemperatur des Matrixmaterials kann dabei nicht nur ein hoher Karbidanteil vorgesehen sein, sondern ist auch eine unerwünschte Umwandlung bzw. Auflösung der vorhandenen Karbide nicht zu befürchten. Die erfindungsgemäßen Volumen- und Gewichtsverhältnisse zwischen Matrixmaterial und keramischen Einlagerungen stellen sicher, dass die Keramikpartikel eng einander benachbart sein können, so dass Fremdkörpern wenig Angriffsmöglichkeiten geboten werden, was sich vorteilhaft auf die erzielbare Tragfähigkeit und Lebensdauer auswirkt. Die mehrschichtige Ausbildung der erfindungsgemäßen Verschleißschutzbeschichtung mit einer oberen Deckschicht und einer unteren Bindeschicht mit jeweils vergleichsweise wenig oder keinen keramischen Partikeln führt dazu, dass die keramischen Partikeln im Wesentlichen in der mittleren Tragschicht versammelt sind, die nach dem Verschleiß der oberen Deckschicht freigelegt wird und dabei mit ihren Eigenschaften voll zur Wirkung kommt. Da die obere Deckschicht und die untere Bindeschicht im Wesentlichen aus dem Matrixmaterial der mittleren Tragschicht bestehen ist sichergestellt, dass dieses auf der ganzen Dicke der aufgebrachten Deckschicht vorliegt, so dass die obere Verschleißschicht und die untere Bindeschicht fugenlos in die Matrix der mittleren Tragschicht übergehen, was eine gute innere Bindung gewährleistet.

Die auf das Verfahren sich beziehende Aufgabe wird erfindungsgemäß durch die dem Anspruchs 7 zugrunde liegende Merkmalskombination gelöst.

Der niedrige Schmelzpunkt des Matrixmaterials ermöglicht in vorteilhafterweise eine Nutzung der zugeführten Wärme zum direkten Aufsintern der Beschichtung. Das Beschichtungsmaterial kann daher in vorteilhafter Weise dem Basismaterial in einem festen Aggregatzustand zugeführt werden, was eine besonders einfachte Arbeitsweise ergibt. Dabei kann die Menge der aufgebrachten Materialmischung so bemessen werden, dass die dem Basismaterial zugeführte Wärme ausreicht, um das in der Materialmischung enthaltene Matrixmaterial zu schmelzen, was die Erziehlung eines zuverlässigen Sintervorgangs begünstigt.

Vorteilhafte Ausgestaltungen und zweckmäßige Fortbildungen sind in den Unteransprüchen angegeben. So kann nach einem ersten Sintervorgang zweckmäßig wenigstens ein weiterer Erwärmungsvorgang erfolgen. Dies führt vorteilhaft zu einer Verfestigung der oberflächennahnen Bereiche und zu einer glatten Ausbildung der Oberfläche.

Weitere zweckmäßige Ausgestaltungen und vorteilhafte Weiterbildungen der übergeordneten Maßnahmen sind in den restlichen Unteransprüchen angegeben und aus der nachstehenden Beispielsbeschreibung anhand der Zeichnung näher entnehmbar.

In der nachstehende beschriebenen Zeichnung zeigen:
- Figur 1: einen Teilschnitt durch ein mit einer Verschleißschutzbeschichtung versehenes Bauteil,
- Figur 2: einen Teilschnitt durch die Verschleißschutzbeschichtung im Betriebszustand in gegenüber Figur 1 vergrößertem Maßstab und
- Figuren 3-5: mehrere Verfahrensschritte bei der Herstellung einer Verschleißschutzbeschichtung einer Kolbenringnut.

Die Erfindung ist überall dort einsetzbar, wo es darum geht, einen Verschleiß von verschleißgefährdeten Bauteilen zu mindern oder zu verhindern. Hauptanwendungsgebiet der Erfindung sind die Tragflächen von Kolbenringnuten, die Laufflächen von Kolbenringen, Zylinderbuchsen, Kolben, Kreuzkopfführungen und dergleichen von Großmotoren, insbesondere Zweitakt-Großdieselmotoren.

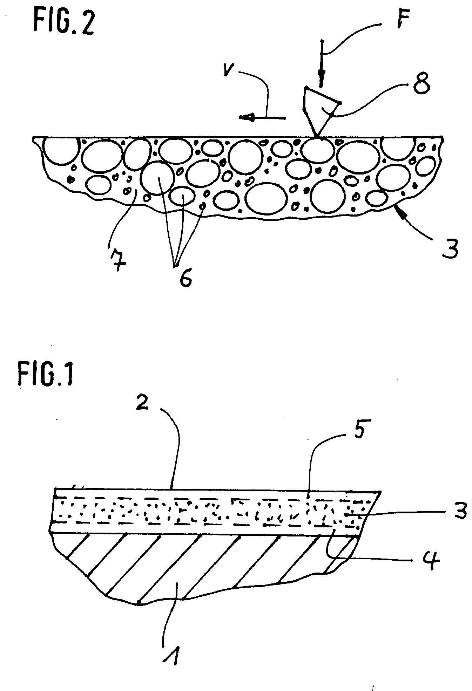

Bauteile der genannten Art bestehen, wie in Figur 1 angedeutet ist, aus einem metallischen Basismaterial 1, z. B. Gusseisen, und sind im Bereich der verschleißgefährdeten Oberfläche mit einer auf das Basismaterial 1 aufgebrachten Beschichtung 2 versehen. Bei dem der Figur 1 zugrundeliegenden Beispiel ist die Beschichtung 2 mehrschichtig ausgebildet. In jedem Fall ist eine hier durch die mittlere Schicht gebildete Tragschicht 3 vorgesehen, die aus keramischem Material, vorzugsweise Wolframkarbid (WC), bestehende Partikel enthält, die in einer aus metallischem Material bestehenden Matrix aufgenommen sind. Unterhalb der Tragschicht 3 befindet sich im dargestellten Beispiel eine Bindeschicht 4, oberhalb der Tragschicht 3 eine Deckschicht 5. Die Bindeschicht 4 hat die Aufgabe, eine gute Anbindung der Beschichtung 2 an das Basismaterial 1 zu bewerkstelligen.

Die Deckschicht 5 hat die Aufgabe, die nachträgliche Bearbeitung der Beschichtung 2 zu erleichtern.

Nach Entfernung der Deckschicht 5, das heißt im normalen Betriebszustand, ist die Tragschicht 3, wie Figur 2 anschaulich zeigt, freigelegt und bildet die einem Verschleißangriff ausgesetzte Außenseite des betreffenden Bauteils. Die Tragschicht 3 besteht, wie schon erwähnt, aus keramischen Partikeln 6, die in einer metallischen Matrix 7 aufgenommen sind. Die keramischen Partikel 6 sind zweckmäßig kugelförmig ausgebildet, wobei Durchmesser im Bereich von 30 µ bis 400 µ vorgesehen sein können. Bevorzugte Durchmesser liegen zwischen 40 µ und 160 µ. Auf diese Weise wird erreicht, dass zwischen größeren Keramikpartikeln 6 kleinere Keramikpartikel 6 positioniert sein können, wie Figur 2 anschaulich zeigt. Dies ermöglicht einen hohen Keramikgehalt der Tragschicht 3. Diese kann überwiegend aus keramischen Partikeln bestehen. Zweckmäßig ist dabei ein Volumenverhältnis von keramischen Partikeln 6 zu Matrix 7 von mindestens 60 zu 40 vorgesehen. Dies ergibt bei Verwendung der noch zu beschreibenden Materialien ein Gewichtsverhältnis von mindestens 75 zu 25.

In Figur 2 angedeutete Fremdkörper 8, wie Verbrennungsrückstände, Materialabrieb etc., die spitze Kanten haben können und mit einer Kraft F an die verschleißgefährdete Oberfläche angedrückt und mit einer Geschwindigkeit v gegenüber dieser bewegt werden, finden dabei wenig Möglichkeiten, in diese Oberfläche einzudringen, da sowohl die großen Keramikpartikel 6 als auch die Ansammlungen kleinerer Keramikpartikel 6 die Fremdkörper 8 abweisen, wie aus Figur 2 ersichtlich ist.

Die Keramikpartikel 6 bestehen bevorzugt, wie schon erwähnt, aus WC und besitzen eine Härte im Bereich von mindestens 3000 HV. Das die Matrix 7 bildende Material besteht zweckmäßig aus einer Nickel-Legierung, die außer Nickel (Ni) zumindest noch Phosphor (P) enthält. Zusätzlich kann vorteilhaft auch noch Silizium (Si) vorgesehen sein. Durch P oder P in Kombination mit Si wird die Schmelztemperatur von Ni von etwa 1400°C auf ca. 850°C gesenkt und damit deutlich unter die Schmelztemperatur des Basismaterials 1 gebracht, die z.B. bei Gusseisen bei 1100°C liegt.

Materialien mit 1 - 15 Vol% P, 1 - 6 Vol% Si und Rest Ni sind zur Bildung der Matrix 7 gut geeignet. Bei einem Gehalt von 3,65 Vol% P, 2,15 Vol% Si und Rest Ni lassen sich besonders gute Ergebnisse erreichen, wie durch Versuche bestätigt werden konnte.

Im Bereich der Tragschicht 3 liegt eine etwa gleichmäßige Konzentration an Keramikpartikeln 6 vor. Diese Konzentration nimmt zur Ober- und Unterseite der Beschichtung 2 hin ab. Zweckmäßig bestehen die Bindeschicht 4 und die Deckschicht 5 nur aus Matrix-Material ohne Keramikeinlagerungen. Es wäre natürlich auch denkbar, zur Bildung der Bindeschicht 4 und/oder Deckschicht 5 anstelle von Matrix-Material ein anderes geeignetes Metall zu verwenden.

Die Beschichtung 2 ist zweckmäßig als Sinterformling ausgebildet, der auf das Basismaterial 1 aufgesintert ist. Hierzu wird das Basismaterial 1 im Bereich der zu beschichtenden Oberfläche bis höchstens kurz unterhalb des Schmelzpunkts des Basismaterials 1 erwärmt. Im Falle der Verwendung von Gusseisen als Basismaterial 1 darf die Erwärmung daher höchstens nur bis kurz unterhalb von 1100°C, also beispielsweise bis höchstens ca. 1050°C gehen. Direkt im Anschluss an diese Erwärmung oder mit dieser wird das die Beschichtung 2 bildende Material auf das Grundmaterial 1 aufgebracht. Dabei kann es sich um eine Pulvermischung handeln, die das Matrix-Material und die Keramikpartikel in der gewünschten Konzentration enthält.

Das Pulvermaterial kann mechanisch oder pneumatisch aufgebracht werden. Es wäre aber auch denkbar, aus einer pulverförmigen Materialmischung, welche das Matrix-Material und die Keramikpartikel in der gewünschten Konzentration enthält, durch Sinterung einen Draht, ein Band oder an die Konfiguration der zu beschichtenden Oberfläche angepasste Formteile zu bilden und diesen bzw. diese auf die zu beschichtende Oberfläche aufzulegen, wobei in vorteilhafter Weise eine gewisse Fixierung durch Löten etc. möglich ist. Zur Fixierung der pulverförmigen Materialmischung kann ein Bindemittel, z.B. Wasserglas, Verwendung finden, das beim Sintervorgang verschwindet.

Wichtig ist in jedem Fall dass die aufgebrachte Menge der Materialmischung die Menge nicht übersteigt, deren Matrixanteil mittels der beim Erwärmungsvorgang zugeführten Wärme geschmolzen werden kann. Durch Einhaltung dieser Bedingung wird ein zuverlässiger Sintervorgang erreicht.

Die Wärmezufuhr kann auch in mehren Stufen erfolgen. So kann mit Hilfe eines ersten Erwärmungsvorgangs eine Vorsinterung des aufgebrachten Materials durchgeführt werden. In einem nachfolgenden weiteren Erwärmungsvorgang kann dann eine Endsinterung durchgeführt werden. Im Falle einer vergleichsweise großen Dicke der Beschichtung 2 sind die Vorgänge der Erwärmung und der Materialzufuhr mehrmals hintereinander durchzuführen. Dabei können gleiche oder unterschiedliche Materialzusammensetzungen Verwendung finden. Zweckmäßig erfolgt die Materialzufuhr und Erwärmung bei aufeinanderfolgenden Vorgängen in einander kreuzenden Richtungen.

Die Materialzusammensetzung ist der jeweiligen Funktion angepasst. Bei einer mehrschichtigen Beschichtung der aus Figur 1 entnehmbaren Art sind in jedem Fall mehrere Beschichtungsvorgänge erforderlich, wobei in einem ersten Schritt nur die Bindeschicht 4 und in wenigstens einem oder mehreren weiteren Schritten die Tragschicht 3 und dann schließlich die Deckschicht 5 aufgetragen werden. Es ist auch denkbar, zur Glättung der Oberfläche einen abschließenden Erwärmungsvorgang durchzuführen.

Die Erwärmung kann in unterschiedlicher Weise erfolgen, wobei die gewählten Einrichtungen an die Verhältnisse des Einzelfalls angepasst sein können. So ist z.B. für die Erwärmung schlecht zugänglicher Bereiche die Verwendung einer Induktionsspule denkbar. Dies kann beispielsweise im Falle von Kolbenringnuten besonders zweckmäßig sein. Denkbare wäre aber auch eine Erwärmung des zu beschichtenden Bauteils in einem Ofen oder durch eine Gasflamme oder einen Laserstrahl etc.. Bei der Erwärmung im Ofen kann der die Beschichtung 2 bildende Materialmix bereits vor der Einbringung des Bauteils in den Ofen oder unmittelbar nach Entnahme des Bauteils aus dem Ofen aufgebracht werden. Wärmequellen, die eine lokale Erwärmung bewerkstelligen, wie eine Gasflamme, ein Laserstrahl oder eine Induktionsspule werden zweckmäßig gegenüber dem zu beschichtenden Bauteil mit einer bestimmten Geschwindigkeit bewegt. Dabei kann die Zufuhr des Beschichtungsmaterials entweder dem sich bewegenden Heizfleck folgend unmittelbar neben diesem oder direkt in diesem erfolgen. Bei der Verwendung eines Laserstrahls wird das Beschichtungsmaterial zweckmäßig direkt zum vom Laserstrahl erzeugten Heizfleck zugeführt.

Auch eine Vorwärmung der die Beschichtung bildenden Materialmischung ist möglich. In diesem Fall wird die dem Grundmaterial 1 zur Bewerkstelligung einer Sinterung zuzuführende Wärme reduziert und dennoch ein guter Sintervorgang erreicht. In manchen Fällen kann die aufzubringende Materialmischung bereits soweit erhitzt sein, dass das Matrixmaterial bereits geschmolzen ist, so dass die erforderliche Erwärmung des Grundmaterials sehr stark reduziert werden kann oder ganz verzichtbar ist.

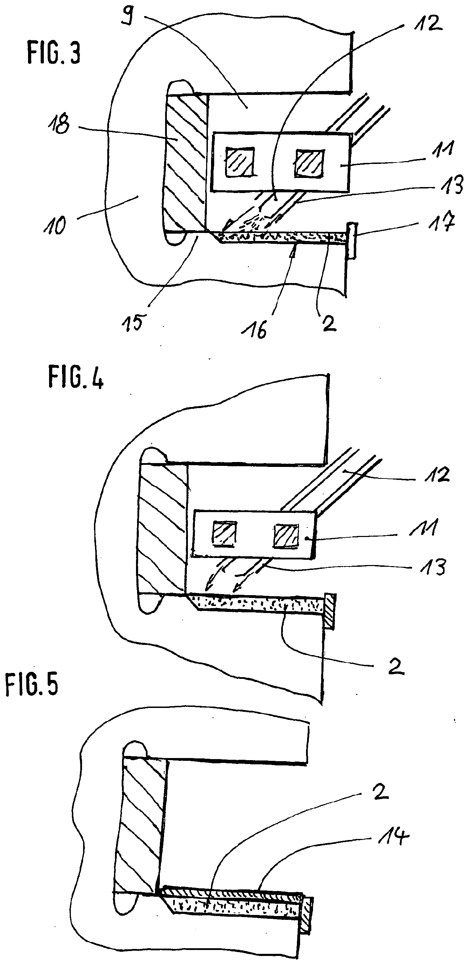

Den Figuren 3 - 5 liegt die Beschichtung der Tragfläche einer Kolbenringnut 9 eines Kolbens 10 eines Zweitakt-Großdieselmotors zugrunde. Das Oberteil des Kolbens 10, das mit mehreren hintereinander angeordneten Kolbenringnuten 9 versehen ist, besteht in der Regel aus Gusseisen. Zur Erwärmung des durch Gusseisen gebildeten Grundmaterials findet im dargestellten Beispiel, wie aus Fig. 3 entnehmbar ist, eine Induktionsspule 11 Verwendung, die oberhalb der zu beschichtenden Oberfläche in der Kolbenringnut 9 platziert wird. Es wäre denkbar, aus mehreren Induktionsspulen 11 eine über den ganzen Umfang der Kolbenringnut 9 umlaufende Anordnung zu bilden. In der Regel genügt jedoch eine sich lediglich über einen Teilbereich des Nutumfangs erstreckende Induktionsspule 11, die umlaufend bewegt wird. Selbstverständlich wäre es auch denkbar, die Induktionsspule 11 stationär anzuordnen und dafür den Kolben 10 zu drehen. Wichtig ist, dass sich eine Relativbewegung ergibt, so dass die einen lokalen Fleck erwärmende Induktionsspule nacheinander den gesamten Umfang der zu beschichtenden Oberfläche erwärmen kann.

Der die Beschichtung bildende Materialmix wird hier in pulverförmiger Form zugeführt. Hierzu ist eine Blasdüse 12 vorgesehen, mittels welcher der pulverförmige Materialmix entweder direkt in den Bereich des von der Induktionsspule 11 erzeugten Heizflecks zugeführt wird, oder in einen diesem direkt folgenden Bereich.

Zweckmäßig wird der Bereich, in den die Zufuhr des Materialmixes erfolgt, mit Schutzgas beaufschlagt. Hierzu kann zur Bewerkstelligung des pneumatischen Transports des Materialmixes Schutzgas Verwendung finden. Im dargestellten Beispiel ist die Blasdüse 12 hierzu mit zusätzlichen, peripheren Schutzgasdüsen 13 versehen.

Zur Herstellung der der Figur 1 zugrundeliegenden, mehrschichtigen Beschichtung 2 wird der oben beschriebene Vorgang mehrmals wiederholt, wobei bei der Herstellung der Bindeschicht 4 und der Deckschicht 5 lediglich Matrixmaterial enthaltendes Pulver zugeführt wird. Sofern die Tragschicht 3 eine Dicke aufweist, die nicht auf einmal hergestellt werden kann, werden auch zur Herstellung der Tragschicht 3 mehrere Vorgänge oben genannter Art durchgeführt. In manchen Fällen kann es zweckmäßig sein, nach Aufbringung des gesamten, die Tragschicht 3 bildenden Materialmixes noch einen weiteren Erwärmungsvorgang ohne Materialaufbringung durchzuführen. Dies liegt der Figur 4 zugrunde. Dabei ist die Induktionsspule 11 aktiviert. Zur Vermeidung einer Oxidation können auch die Düsen 13 zur Zufuhr von Schutzgas aktiviert sein. Die Blasdüse 12 zur Zufuhr von Beschichtungsmaterial ist dabei passiviert. Dieser zusätzliche Erwärmungsvorgang sorgt in vorteilhafter Weise für eine zuverlässige Sinterung auch der oberflächennahen Bereiche sowie eine Glättung der Oberfläche.

Nach Abschluss des Beschichtungsvorgangs kann die aufgebrachte Beschichtung zwei, wie in Figur 5 angedeutet ist, für den Abkühlvorgang mittels eines durch ein Blech etc. gebildeten Deckelements 14 abgedeckt werden, das eine Oxidation während des Abkühlvorgangs verhindert. Das Abdeckelement 14 wird vor seiner Anbringung auf der mit der Oberseite der Beschichtung zwei in Kontakt kommenden Seite zweckmäßig mit einem Trennmittel behandelt, so dass es nach Beendigung des Kühlvorgangs leicht entfernbar ist.

Im dargestellten Ausführungsbeispiel wird die Beschichtung zwei in eine von einem radial inneren Steg 15 der Kolbenringnut 9 bis zum radial äußeren Rand der Kolbeningnut 9 sich erstreckende, taschenförmige Ausnehmung 16 eingebracht, die nach radial außen offen ist. Um dennoch eine zuverlässige Beschichtung auch im Bereich des radial äußeren Rands zu ermöglichen, ist die Ausnehmung 16 während der Herstellung der Beschichtung 2 durch eine umlaufende Verschlussleiste 17 verschlossen, die nach Herstellung der Beschichtung 2 abgenommen wird. Die Verschlussleiste 17 ist dementsprechend im Bereich ihrer Innenseite mit einem Trennmittel behandelt. Um bei der Durchführung des Beschichtungsvorgangs eine Verschmutzung des Stegs 15 und der dahinter liegenden Bereiche der Kolbenringnut 9 zu verhindern ist im dargestellten Beispiel ein Abdeckelement 18 vorgesehen, das während des Beschichtungsvorgangs in den radial inneren Bereich der Kolbenringnut 9 eingelegt wird. Auch hier ist eine Behandlung mit einem Trennmittel zweckmäßig.

## Patentansprüche

1. Verschleißschutzeinrichtung für aus einem metallischen Basismaterial bestehende Bauteile von Maschinen, insbesondere von Zweitakt-Großdieselmotoren, die als auf das Basismaterial aufbringbare Beschichtung (2) ausgebildet ist, die eine metallische Matrix (7) aus einer einen niedrigeren Schmelzpunkt als das Basismaterial aufweisenden Ni-Legierung mit zumindest P als Legierungselement und in dieser aufgenommene Keramikpartikel (6) enthält und die aus einem das ihr zugrundeliegende Material enthaltenden Pulver gebildet ist, mit welchem die Oberfläche des Basismaterials beschichtet ist, wobei die Keramikpartikel (6) zumindest teilweise aus WC bestehen, kugelförmig ausgebildet sind und einen Durchmesser von 40-160 µ sowie eine Härte von 3000 HV aufweisen, wobei die Matrix (7) 1 bis 15 Vol% P 1 bis 6 Vol% Si und Rest Ni enthält und das Volumenverhältnis von keramischen Partikeln (6) zu Matrix (7) mindestens 60 zu 40 und/oder das Gewichtsverhältnis mindestens 75 zu 25 beträgt und wobei die Beschichtung (2) mehrschichtig aufgebaut ist und oberhalb und unterhalb einer mittleren Tragschicht (3) aus dem der Matrix (7) zugrundeliegenden Material bestehende Schichten (4 bzw. 5) vorgesehen sind, die weniger keramische Partikel (6) als die Tragschicht (3) oder gar keine keramischen Partikel (6) aufweisen.

2. Verschleißschutzeinrichtung nach Anspruch 1, **dadurch gekennzeichnet, dass** die die Matrix (7) bildende Ni-Legierung einen Schmelzpunkt aufweist, der deutlich niedriger als der Schmelzpunkt des Basismaterials (1) ist.

3. Verschleißschutzeinrichtung nach Anspruch 2, **dadurch gekennzeichnet, dass** die die Matrix bildende Ni-Legierung einen Schmelzpunkt aufweist, der um wenigstens 200°C niedriger als der Schmelzpunkt von Gusseisen ist.

4. Verschleißschutzeinrichtung nach Anspruch 1, **dadurch gekennzeichnet, dass** die Matrix (7) 3,65 Vol% P, 2,15 Vol% Si und Rest Ni enthält.

5. Verschleißschutzeinrichtung nach einem der vorhergehenden Ansprüche, **dadurch gekennzeichnet, dass** die Beschichtung (2) als Sinterformling ausgebildet ist, der auf das Basismaterial (1) aufgesintert ist.

6. Verschleißschutzeinrichtung nach einem der vorhergehenden Ansprüche, **dadurch gekennzeichnet, dass** die Beschichtung (2) einem aus temperaturempfindlichem Material, vorzugsweise Gusseisen, bestehenden Bauteil, wie den Kolbenringen, Kolbenringnuten, Zylinderbuchsen, Kolben, Führungen von Zweitakt-Großdieselmotoren, zugeordnet ist.

7. Verfahren zur Herstellung einer Verschleißschutzeinrichtung für aus einem metallischen Basismaterial (1) bestehende Bauteile von Maschinen, insbesondere von Zeitakt-Großdieselmotoren, die als auf dem Basismaterial (1) anbringbare Beschichtung (2) ausgebildet ist, die eine aus einer niedrig schmelzenden Ni-Legierung mit einem niedrigeren Schmelzpunkt als das Basismaterial (1) bestehende metallische Matrix (7) und hierin aufgenommene Partikel (6) aus keramischem Material enthält, nach einem der vorhergehenden Ansprüche, **dadurch gekennzeichnet, dass** das Basismaterial (1) im zu beschichtenden Bereich lokal bis höchstens kurz unterhalb des Schmelzpunkts des Basismaterials (1) erwärmt wird und dass gleichzeitig oder im direkten Anschluss daran auf die lokal erwärmte Oberfläche des Basismaterials (1) eine das der Matrix (7) zugrunde liegende Material und die Keramikpartikel (6) enthaltende Materialmischung als Pulver aufgebracht und mittels der dem Basismaterial (1) lokal zugeführten Wärme auf dieses aufgesintert wird, wobei die Menge der jeweils aufgebrachten Materialmischung so bemessen wird, dass die dem Basismaterial (1) zugeführte Wärme ausreicht, um das in der aufgebrachten Materialmischung enthaltene Matrixmaterial zu schmelzen und wobei bei der Erwärmung des Basismaterials (1) und Zufuhr der das Beschichtungsmaterial enthaltenden Pulvermischung eine oberflächenparallele Relativbewegung zwischen der zur lokalen Erwärmung vorgesehenen Wärmequelle und der zu beschichtenden Oberfläche vorgesehen ist und wobei die das der Matrix (7) zugrunde liegende Material und die Keramikpartikel enthaltende Pulvermischung in einen dem jeweils erwärmten Fleck unmittelbar folgenden Bereich oder direkt in den jeweils erwärmten Fleck zugeführt wird, wobei oberhalb und unterhalb einer mittleren Tragschicht (3) aus dem der Matrix (7) zugrundeliegenden Material bestehende Schichten (4 bzw. 5) gebildet werden, die weniger keramische Partikel (6) als die Tragschicht (3) oder gar keine keramischen Partikel (6) aufweisen.

8. Verfahren nach Anspruch 7, **dadurch gekennzeichnet, dass** nach einem ersten Sintervorgang wenigstens ein Erwärmungsvorgang ohne Materialzufuhr erfolgt.

9. Verfahren nach einem der Ansprüche 7 oder 8, **dadurch gekennzeichnet, dass** die zu beschichtende Oberfläche zumindest während des Sintervorgangs mit Schutzgas beaufschlagt wird.

10. Verfahren nach einem der vorhergehenden Ansprüche 7 - 9, **dadurch gekennzeichnet, dass** die auf das Basismaterial (1) aufzubringende Materialmischung vor und/oder während des Aufbringvorgangs vorgeheizt wird.

11. Verfahren nach einem der vorhergehenden Ansprüche 7 - 10, **dadurch gekennzeichnet, dass** die Beschichtung (2) in mehreren, aufeinander folgenden Lagen (4, 3, 5) aufgebracht wird.

12. Verfahren nach Anspruch 11, **dadurch gekennzeichnet, dass** die aufeinanderfolgenden Lagen (4, 3, 5) unterschiedliche Materialzusammensetzungen aufweisen.

13. Verfahren nach Anspruch 12, **dadurch gekennzeichnet, dass** eine untere Bindeschicht (4) und/oder eine obere Deckschicht (5) vorgesehen ist bzw. sind, die zumindest weitgehend, vorzugsweise ganz keramikfrei ist bzw. sind, vorzugsweise aus dem der Matrix (7) zugrundeliegenden Material besteht bzw. bestehen.

## Claims

1. A wear protection device for machine components consisting of a metallic base material, in particular of large two stroke cycle diesel engines, which is designed as a coating (2) applicable on the base material, which contains a metallic matrix (7) of a Ni alloy with at least P as alloy element, such Ni alloy having a lower melting point than the base material, and further contains ceramic particles (6) received in the said matrix (7) which is formed of a powder containing the material underlying the said matrix with which the surface of the base material is coated, with the ceramic particles (6), at least partly consisting of tungsten carbide, being of spherical shape and having a diameter of 40 - 160 µ and a hardness of 3000 HV, with the matrix (7) containing 1-15 vol% of P, 1-6 vol% of Si and balance Ni and the volume ratio of ceramic particles (6) to matrix (7) being at least 60 to 40 and/or the weight ratio at least 75 to 25, and with the coating (2) being of a multilayer design, and with layers (4 and/or 5) being provided above and below a middle carrier layer (3) consisting of the material underlying the matrix (7) and containing less ceramic particles (6) than the carrier layer (3) or no ceramic particles (6) at all.

2. A wear protection device in accordance with claim 1, **whereby** the Ni alloy forming the matrix (7) has a melting point which is considerably lower than the melting point of the base material (1).

3. A wear protection device in accordance with claim 2, **whereby** the Ni alloy forming the matrix has a melting point which is at least 200°C lower than the melting point of cast iron.

4. A wear protection device in accordance with claim 1, **whereby** the matrix (7) contains 3.65 vol% of P, 2.15 vol% of Si and balance Ni.

5. A wear protection device in accordance with any of the preceding claims, **whereby** the coating (2) is designed as a sinter casting which is sintered on the base material (1).

6. A wear protection device in accordance with any of the preceding claims, **whereby** the coating (2) is associated with a component consisting of a temperature-sensitive material, preferably cast iron, such as piston rings, piston ring grooves, cylinder liners, pistons, guiding means of large two stroke cycle diesel engines.

7. A method for the production of a wear protection device for machine components consisting of a metallic base material (1), in particular of large two stroke cycle diesel engines, which is designed as a coating (2) applicable on the base material (1), which contains a metallic matrix (7) consisting of a Ni alloy with a low melting point and a lower melting point than the base material (1) and further contains particles of ceramic material (6) received in the said metallic matrix (7) in accordance with any of the preceding claims, **whereby** the base material (1) in the region to be coated is locally heated up to a maximum temperature just below the melting point of the base material (1) and simultaneously or directly afterwards a material underlying the matrix (7) and the material mix containing the ceramic particles (6) is applied on the locally heated surface of the base material (1) in the form of powder and sintered on the base material (1) by means of the heat fed to the base material (1), with the amount of the material mix applied to the base material (1) being dimensioned in such a manner that the heat fed to the base material (1) suffices to melt the matrix material contained in the applied material mix, and with a surface-parallel relative movement being provided between the heat source provided for the local heating and the surface to be coated during the heating of the base material (1) and the feeding of the powder mix containing the coating material, and with the material underlying the matrix (7) and the powder mix containing the ceramic particles being fed to a region directly adjacent to the heated spot or directly into the heated spot, and with layers (4 and/or 5) being formed above and below a middle carrier layer (3) consisting of the material underlying the matrix (7) and containing less ceramic particles (6) than the carrier layer (3) or no ceramic particles (6) at all.

8. A method in accordance with claim 7, **whereby** at least one heating process follows a first sintering process without any material being supplied.

9. A method in accordance with any of the claims 7 or 8, **whereby** the surface to be coated is supplied with shielding gas at least during the sinter process.

10. A method in accordance with any of the preceding claims 7 to 9, **whereby** the material mix to be applied to the base material (1) is preheated before and/or during the application process.

11. A method in accordance with any of the preceding claims 7 to 10, **whereby** the coating (2) is applied in several, successive layers (4, 3, 5).

12. A method in accordance with claim 11, **whereby** the successive layers (4, 3, 5) comprise different material compositions.

13. A method in accordance with claim 12, **whereby** provision is made for a lower bonding layer (4) and/or an upper cover layer (5) which are/is largely ceramic free, and/or preferably entirely ceramic free, preferably consist/s of the material underlying the matrix (7).

## Revendications

1. Dispositif de protection contre l'usure pour des composants de machines faits à partir d'un matériau de base métallique, en particulier de gros moteurs diesel à deux temps, qui est réalisé en tant que revêtement (2) applicable au matériau de base, qui comprend une matrice métallique (7) en un alliage de Ni présentant un point de fusion inférieur à celui du matériau de base et ayant au moins P comme élément d'alliage, ainsi que des particules de céramique (6) reçues à l'intérieur de celle-ci, et qui est formé d'une poudre laquelle contient le matériau qui est à sa base et par laquelle la surface du matériau de base est revêtue, dans lequel les particules de céramique (6) se composent au moins en partie de WC, sont sphériques et présentent un diamètre compris entre 40 et 160 µm et une dureté de 3000 HV, dans lequel la matrice (7) contient entre 1 et 15 % volumétrique de P, entre 1 et 6 % volumétrique de Si et le reste est du Ni, et le rapport en volume de particules de céramique (6) à la matrice (7) est d'au moins 60 à 40, et/ou le rapport pondéral est d'au moins 75 à 25, et dans lequel le revêtement (2) est réalisé à plusieurs couches, et au-dessus et au-dessous d'une couche porteuse (3) centrale sont prévues des couches (4 ou bien 5) qui se composent du matériau qui est à la base de la matrice (7) et qui présentent moins de particules de céramique (6) que ladite couche porteuse (3) ou ne présentent pas de particules de céramique (6).

2. Dispositif de protection contre l'usure selon la revendication 1, **caractérisé par le fait que** l'alliage de Ni formant la matrice (7) présente un point de fusion qui est sensiblement inférieur au point de fusion du matériau de base (1).

3. Dispositif de protection contre l'usure selon la revendication 2, **caractérisé par le fait que** l'alliage de Ni formant la matrice présente un point de fusion qui est d'au moins 200 °C inférieur au point de fusion de la fonte.

4. Dispositif de protection contre l'usure selon la revendication 1, **caractérisé par le fait que** la matrice (7) contient 3,65 % volumétrique de P, 2,15 % volumétrique de Si et le reste est du Ni.

5. Dispositif de protection contre l'usure selon l'une quelconque des revendications précédentes, **caractérisé par le fait que** le revêtement (2) est réalisé sous la forme d'un corps formé par frittage qui est fritté sur le matériau de base (1).

6. Dispositif de protection contre l'usure selon l'une quelconque des revendications précédentes, **caractérisé par le fait que** le revêtement (2) est associé à un composant réalisé à partir d'un matériau sensible à la température, de préférence de fonte, tel que segments de piston, gorges de segments de piston, chemises de cylindres, pistons, guides de gros moteurs diesel à deux temps.

7. Procédé de fabrication d'un dispositif de protection contre l'usure pour des composants de machines faits à partir d'un matériau de base métallique (1), en particulier de gros moteurs diesel à deux temps, qui est réalisé en tant que revêtement (2) applicable au matériau de base (1), qui comprend une matrice métallique (7) en un alliage de Ni à bas point de fusion présentant un point de fusion inférieur à celui du matériau de base (1) ainsi que des particules (6) en matériau céramique reçues à l'intérieur de celle-ci, selon l'une quelconque des revendications précédentes, **caractérisé par le fait que** le matériau de base (1) est chauffé localement, dans la zone à revêtir, au maximum jusqu'à un point situé juste un peu au-dessous du point de fusion du matériau de base (1) et que, en même temps ou directement à la suite, un mélange de matériau sous forme de poudre, contenant le matériau qui est à la base de la matrice (7) et les particules de céramique (6), est appliqué à la surface chauffée localement du matériau de base (1) et est fritté sur le matériau de base (1) au moyen de la chaleur amenée localement à ce dernier, dans lequel la quantité du mélange de matériau respectivement appliqué est telle que la chaleur amenée au matériau de base (1) est suffisante pour faire fondre le matériau de matrice contenu dans le mélange de matériau, et dans lequel on prévoit un mouvement relatif parallèle à la surface entre la source de chaleur prévue pour le chauffage local et la surface à revêtir, lorsque le matériau de base (1) est chauffé et que le mélange de poudre contenant le matériau de revêtement est amené, et dans lequel le mélange de poudre contenant le matériau qui est à la base de la matrice (7) et les particules de céramique est fourni dans une zone directement contiguë au point respectivement chauffé ou est fourni directement audit point chauffé, au-dessus et au-dessous d'une couche porteuse (3) centrale étant formées des couches (4 ou bien 5) qui se composent du matériau qui est à la base de la matrice (7) et qui présentent moins de particules de céramique (6) que ladite couche porteuse (3) ou ne présentent pas de particules de céramique (6).

8. Procédé selon la revendication 7, **caractérisé par le fait qu'**après une première opération de frittage, on procède à au moins une opération de chauffage sans apport de matériau.

9. Procédé selon l'une quelconque des revendications 7 ou 8, **caractérisé par le fait que** la surface à revêtir est exposée à un gaz protecteur au moins durant l'opération de frittage.

10. Procédé selon l'une quelconque des revendications précédentes 7 à 9, **caractérisé par le fait que** le mélange de matériau à appliquer au matériau de base (1) est préchauffé avant et/ou durant l'opération d'application.

11. Procédé selon l'une quelconque des revendications précédentes 7 à 10, **caractérisé par le fait que** le revêtement (2) est appliqué en plusieurs couches successives (4, 3, 5).

12. Procédé selon la revendication 11, **caractérisé par le fait que** les couches successives (4, 3, 5) présentent des compositions de matériau différentes.

13. Procédé selon la revendication 12, **caractérisé par le fait que** l'on prévoit une couche de liaison inférieure (4) et/ou une couche de recouvrement supérieure (5) qui est ou bien sont, au moins dans une large mesure, de préférence complètement exempte(s) de céramique, de préférence se compose(nt) du matériau qui est à la base de la matrice (7).
